# EUROPÄISCHE PATENTANMELDUNG

(11) **EP 3 989 414 A1**
(43) Veröffentlichungstag der Anmeldung: **27.04.2022**
(21) Anmeldenummer: 20203317.1
(22) Anmeldetag: 22.10.2020
(51) Int. Cl.: H02K 7/00, H02K 7/06, H02K 11/33, H02K 5/04

(54) **ELEKTROZYLINDER, ELEKTROZYLINDER MIT EINEM MAGNETEN ZUR FESTSTELLUNG DER POSITION EINES DREHELEMENTS EINES ELEKTROZYLINDERS SOWIE VERWENDUNG EINES MAGNETEN ZUR POSITIONSFESTSTELLUNG EINES DREHELEMENTS**

(71) Anmelder: Cyltronic AG, 8406 Winterthur (CH)
(72) Erfinder: Wehrli, Jeremias, 8400 Winterthur (CH)
(74) Vertreter: Hepp Wenger Ryffel AG

(57) **Zusammenfassung**

Die Erfindung betrifft einen Elektrozylinder mit im Gehäuseinneren angeordneten Motor, Steuervorrichtung und Spindelvorrichtung zur Erzeugung einer Linearbewegung des Ausfahrelements. Dabei weisen der Rotor des Motors und das Drehelement der Spindelvorrichtung dieselbe Drehachse auf. Alle Bestandteile des Elektrozylinders sind besonders platzsparend in einem Gehäuse angeordnet und die Steuervorrichtung umfasst nur genau eine starre Leiterplatte zur Motorsteuerung.

## Beschreibung

Die Erfindung betrifft einen Elektrozylinder sowie einen Elektrozylinder mit Magnet zur Bestimmung einer Winkellage und axialer Position eines Ausfahrelements.

Bekannte Elektrozylinder umfassen einen elektrischen Motor, um eine Hubbewegung eines Ausfahrelements zu steuern, indem eine Drehbewegung eines Motors in eine Linearbewegung des Ausfahrelements umgesetzt wird.

Bisherige Ausführungen von Elektrozylindern sind im Verhältnis zu ihrer Hublänge gross. Weiterhin ist der Einsatz von Elektrozylindern üblicher Weise mit einer externen und/oder grossen Steuervorrichtung versehen und der Motor ist entweder koaxial oder seitlich versetzt zur Spindelvorrichtung angeordnet.

Aktuelle Elektrozylinder sind daher nicht einfach für einen bestehenden Pneumatikzylinder einsetzbar, sondern erfordern umfangreiche Anpassungen. Diese Kriterien müssen zudem in einer möglichst preiswerten Ausführung eines Elektrozylinders vereint werden.

In EP3429065A1 wird ein Elektrozylinder beschrieben. Der Motor, sowie die zugehörige Elektronik und Spindelvorrichtungen und Ausfahrelement befinden sich dazu in einem Gehäuse. Es wird ein elektrischer Motor genutzt, der versetzt zur Spindelvorrichtungsachse angebracht wird und die Spindelvorrichtung über ein mechanisches Getriebe antreibt.

Durch diesen Antrieb wird die Spindelvorrichtung bewegt und das Ausfahrelement verfährt.

Diese Vorrichtung hat den Nachteil, dass sie nicht platzsparend ist und somit nicht konkurrenzfähig gegenüber etablierten Pneumatikzylindern ist.

Es ist daher eine Aufgabe der Erfindung, diese Nachteile des Standes der Technik zu überwinden und einen Elektrozylinder zu entwickeln, der eine kompakte Bauform ermöglicht und alternativ zu Pneumatikzylindern eingesetzt werden kann.

Die Aufgabe wird durch einen Elektrozylinder gemäss den unabhängigen Ansprüchen gelöst. Insbesondere wird die Aufgabe durch einen Elektrozylinder, der einen Motor mit Stator und Rotor, eine Spindelvorrichtung mit einem Drehelement und ein Ausfahrelement, eine Steuervorrichtung und ein Gehäuse mit einem Gehäuseinnenraum umfasst. Die Steuervorrichtung steuert den Motor. Der Rotor und das Drehelement haben dieselbe Drehachse, so dass der Motor die Spindelvorrichtung antreibt. Der Rotor ist vorzugsweise auf dem Drehelement fixiert. Die Steuervorrichtung umfasst genau eine starre Leiterplatte für die Motorsteuerung, wobei der Motor, das Drehelement und die Steuervorrichtung im Gehäuseinnenraum angeordnet sind.

Die Nutzung von genau einer starren Leiterplatte führt zu einer Platzersparnis.

Die Anbringung nur einer einzigen starren Leiterplatte unter einer der Seiten des Elektrozylinders setzt voraus, dass die Steuervorrichtung hinsichtlich des begrenzten Platzes des Gehäuseinnenraums optimiert ist, und alle elektronischen Bauelemente auf einer starren Leiterplatte angebracht werden können, ohne die Dimensionen im Vergleich zu einem Pneumatikzylinder zu erhöhen. Zudem erleichtert eine einzige starre Leiterplatte die Wartung, verringert die Produktionskosten und ermöglicht ein kleineres Gehäuse. Des Weiteren ermöglicht die Anordnung einer einzigen starren Leiterplatte eine kurze Verbindung zum Motor, was das elektromagnetische Verträglichkeitsverhalten positiv beeinflusst. Zudem sind die Leiterplatte und ihre elektronischen Bauelemente so angeordnet, dass die beweglichen Komponenten, wie das Ausfahrelement oder die Spindelmutter, eine möglichst gute elektromagnetische Verträglichkeit zu ihnen aufweisen.

Mit dem Begriff "starrer Leiterplatte" ist in diesem Zusammenhang eine nicht plastisch verformbare Leiterplatte gemeint, die insbesondere eine ebene planare Fläche aufweist, auf der die elektronischen Bauelemente angebracht werden können.

Der Rotor und das Drehelement weisen zudem dieselbe Drehachse auf. Dies hat den Vorteil, dass keine zusätzliche mechanische Übersetzung benötigt wird und der Motor unmittelbar hinter oder koaxial zu dem Drehelement gelagert werden kann, was eine weitere Platz- und Kostenersparnis bedeutet.

Die vorzugsweise Fixierung des Rotors auf dem Drehelement bietet den Vorteil ein mechanisches Getriebe zu sparen.
Dies hat zur Folge, dass die Lagerung der Spindelvorrichtung also auch die Lagerung des Motors ist, und somit weniger Bestandteile benötigt werden und die Kosten minimiert werden.

Die Unterbringung aller Komponenten für einen Elektrozylinder in einem Gehäuse in Kombination mit platzsparendem Aufbau bietet eine kostengünstige Ausbildung eines Elektrozylinders der analog zu etablierten Pneumatikzylindern verwendbar ist.

Die Spindelvorrichtung des Elektrozylinders umfasst vorzugsweise eine Spindelmutter, die in das Gewinde des Drehelements greift und mit dem Ausfahrelement mittels eines Gewindes an der Spindelmutter starr verbunden ist, ohne ein zusätzliches Verbindungselement und die Drehbewegung des Drehelements in eine axiale Ausfahrbewegung des Ausfahrelements umwandelt.

Dieser Aufbau ist ebenfalls sehr platzsparend und möglichst verschleissarm.

Der Elektrozylinder umfasst vorzugsweise eine Drehmomentstütze zwischen der Spindelmutter und dem Ausfahrelement. Die Drehmomentstütze besteht vorzugsweise aus einem Metallring und einem Kunststoffgleiter oder einem einzigen Kunststoffteil.

Diese Drehmomentstütze dient dazu die aus dem Drehmoment entstehenden Kräfte der Spindelvorrichtung auf die Gleitbahn im Gehäuse zu übertragen.

Die starre Leiterplatte des Elektrozylinders umfasst vorzugsweise, in Bezug auf die Bauhöhe senkrecht zur Leiterplattenebene, angeordnete kleine und grosse elektronische Bauelemente. Zumindest eins dieser elektronischen Bauelemente, bevorzugt alle grossen elektronischen Bauelemente, insbesondere Transistoren und/oder Wandler, sind am Rand der Leiterplatte, insbesondere am Rand einer längeren Seite der Leiterplatte angeordnet.

Dies bietet den Vorteil, dass die starre Leiterplatte weniger Platz im Gehäuseinnenraum einnimmt. Für die Platzersparnis ist es wichtig, dass die grösseren elektronischen Bauelemente, insbesondere Transistoren und/oder Wandler, auf kleinem Raum im Gehäuse angeordnet werden können, um ein möglichst kleines Gehäuse zu gewährleisten. Deshalb werden die elektronischen Bauelemente vorzugsweise so auf der starren Leiterplatte angebracht, dass sie möglichst weit weg von der Spindelachse angebracht sind, und in den Gehäuseinnenraum zu den Seiten der Spindelvorrichtung ragen, da an dieser Stelle Platz zur Verfügung steht. In Bezug auf die starre Leiterplatte bedeutet das, dass die grösseren elektronischen Bauelemente möglichst am Rand der längeren Seiten der starren Leiterplatte mit der längsten Ausdehnung der elektronischen Bauelemente senkrecht zur Leiterplatte angebracht werden.

Die Steuervorrichtung des Elektrozylinders umfasst vorzugsweise zwei Anschlüsse. Ein Anschluss dient der Steuervorrichtung zur Leistungs- und Spannungsversorgung und ein Anschluss der Kommunikation mit der Steuervorrichtung.

Diese Anschlüsse haben zum einen den Vorteil, dass ein grosses Mass an Sicherheit im Falle eines Defekts oder Ausfalls sichergestellt ist, da die Leistungsversorgung von der Steuerung unabhängig ist. Zum anderen sind die Anschlüsse der Steuervorrichtung vorteilhafter Weise so gestaltet, dass sie analog zu einem Pneumatikzylinder angeschlossen und bedient werden können und somit vielfältige Einsatzbereiche bedienen können, ohne den Nachteil auf Druckluft angewiesen zu sein.

Die Steuervorrichtung des Elektroylinders umfasst vorzugsweise ein Interaktionselement. Dieses Interaktionselement umfasst Einstellelemente und/oder Zustandsanzeigeelemente. Die Einstellelemente dienen zur Geschwindigkeitsverstellung und/oder Kraftverstellung direkt am Zylinder.

Ein Interaktionselement direkt auf dem Elektrozylinder bietet den Vorteil, dass keine externe Elektronik benötigt wird. Die Verstellungsmöglichkeiten sind analog zu den Verstellungsmöglichkeiten eines Pneumatikzylinders direkt am Elektrozylinder angebracht, so dass eine direkte Steuerung ohne externe Elektronik möglich ist.

Dies hat den Vorteil, dass jeder Nutzer ohne Softwarekenntnisse den Elektrozylinder in Betrieb nehmen kann und er somit für eine Vielzahl von Verwendungen zugänglich ist.

Mögliche Elemente, die mit dem Interaktionselement eingestellt werden können sind: die Potentiometer für die Ein- und Ausfahrgeschwindigkeit und die Kraft. Die Kommutierung und Regelung des Motors wird dann automatisch von der Steuervorrichtung angepasst.

Vorzugsweise weist das Interaktionselement Einstellschrauben für die Geschwindigkeit beim Ausfahren und beim Einfahren (Speed IN/OUT) und eine Einstellschraube für die Kraft auf.

Das Interaktionselement umfasst vorzugsweise Zustandsanzeigeelmente, die die Einstellungen der Werte des Nutzers anzeigen und/oder den Zustand des Geräts, vorzugsweise durch Leuchten, Dioden, LEDs und/oder ein Display, anzeigen.

Dies hat den Vorteil, dass der Nutzer des Zylinders über einen visuellen Output den Zustand des Elektrozylinders auslesen kann, ohne externe Hardware oder Software zu benötigen.

Diese Zustandsanzeigen geben durch vorzugsweise LEDs Informationen des Elektrozylinders an. Das Interaktionselement wird mit Befestigungselementen unmittelbar auf dem Gehäuse angebracht und dient vorzugsweise zumindest teilweise als Gehäusedeckel.

Der Elektrozylinder weist vorzugsweise Anschlusselemente auf.

Mindestens eins der Anschlusselemente ist am Ausfahrelement angeordnet. Insbesondere ist ein Anschlusselement an einer oder beiden Stirnseiten des Gehäuses ausgebildet.

Die Anschlusselemente bieten Vorteile durch, insbesondere standardisierte, Befestigungsmöglichkeiten und eine flexible Nutzung des Elektrozylinders.

Die Anschlusselemente haben den Vorteil, dass der Elektrozylinder je nach Problemstellung mit einem entsprechenden Anschlusselement ausgestattet werden kann. Analog zu einem Pneumatikzylinder, vorzugsweise für einen 32 mm Zylinderdurchmesser, können alle Anbauteile verwendet werden. Somit ist der Elektrozylinder nicht nur vom Erscheinungsbild, insbesondere der Anschlusselemente (vorzugsweise nach DIN ISO 15552), sondern auch der Anwendungsmöglichkeiten konkurrenzfähig zu einem Pneumatikzylinder.

Das Gehäuse des Elektrozylinders ist vorzugsweise so klein, sodass ein orthogonaler Schnitt zur Drehelementachse durch den Elektrozylinder niemals breiter als 150 % des Aussendurchmessers des Motors ist. Ausgenommen davon sind die aus dem Gehäuse ragenden Anschlüsse. Mit dem Aussendurchmesser des Motors ist der Aussendurchmesser des äusseren Teils des Motors, also entweder der Stator als äusserer Teil oder der Rotor als äusserer Teil gemeint.

Somit ist keine Stelle des Gehäuses sehr viel breiter als der Motor. Dies hat den Vorteil, dass das Gehäuse, trotz interner Anbringung aller Komponenten, sehr klein ist.

Der Elektrozylinder weist vorzugsweise zwei koaxial zum Drehelement, beidseitig des Rotors angeordnete, Kugellager auf.

Dies hat den Vorteil, dass durch die relativ breite Lagerung der Rotor gut abgestützt ist und gleichzeitig eine gute Abstützung des Drehelements gegeben ist. Somit wird eine längere Laufzeit gewährleistet.

Das Gehäuse des Elektrozylinders weist im Querschnitt ein im Wesentlichen vieleckiges, bevorzugt im Wesentlichen viereckiges, insbesondere bevorzugt im Wesentlichen quadratisches Gehäuse auf und/oder der Körper des Gehäuses ist aus einem Aluminium-Strangpressprofil gefertigt.

Die vieleckige Form hat den Vorteil, dass sie es ermöglicht eine starre, ebenmässige Leiterplatte möglichst platzsparend, ohne Vergrösserung des Gehäuses, im Gehäuseinnenraum unterzubringen. Die quadratische Form ist insbesondere geeignet, da diese ebenfalls den Abmessungen eines herkömmlichen Pneumatikzylinders entspricht. Das Gehäuse eines Elektrozylinder sollte idealer Weise aus einem leichten aber stabilen Material gefertigt sein. Ein Aluminium-Strangpressprofil weist ein geringes Gewicht auf, ist kostengünstig und eignet sich daher sehr gut. Die Verwendung eines Aluminium-Strangpressprofil ermöglicht dem Elektrozylinder einen sehr kompakten Aufbau mit dem Vorteil, dass keine externe Elektronik oder gar Kühlung verwendet werden muss. Dennoch könnte der Elektrozylinder sehr leicht mit zusätzlicher interner Kühlung, wie Lüftern oder Wärmetauschern, oder externer Kühlung versehen werden, da die im Betrieb erwärmten Spulen des Stators aussen im Gehäuse angebracht sind.
Die Grösse des Motors ist somit leicht anzupassen, wodurch die Wärmeableitung des Motors leicht verbessert werden kann. Im Gegensatz zu Pneumatikzylindern ist zudem keine Kompressionsvorrichtung mit entsprechenden Leitungen und Ventilen notwendig. Ausserdem entsteht im Gegensatz zu Pneumatikzylindern kein Energieverlust durch Verdichtung von Luft am Kompressor. Zudem werden im Elektrozylinder keine Komponenten durch stark expandierende Luft abgekühlt. Da der Elektrozylinder dennoch analog zu Pneumatikzylindern verwendet werden kann, erschliessen sich viele Anwendungsbereiche, die schwer zugänglich und/oder keine externen Komponenten erlauben.

Der Elektrozylinder ist vorzugsweise dadurch gekennzeichnet, dass das Gehäuse über die gesamte Länge im Wesentlichen den gleichen Querschnitt aufweist, abgesehen von den Anschlüssen und Zustandsanzeigeelemente.

Durch einen konstanten Querschnitt, können alle Komponenten des Elektrozylinders platzsparend im Gehäuse platziert werden und eine analoge Form und ähnliche Masse zu Pneumatikzylinern ausgebildet werden.

Das Gehäuse des Elektrozylinders soll zudem vorzugsweise einen körperseitigen und zwei stirnseitige Gehäusedeckel umfassen. Einer der stirnseitigen Gehäusedeckel ist zudem bevorzugt gleichzeitig das Motorgehäuse des Motors.

Die starre Leiterplatte kann mit dem körperseitigen Gehäusedeckel abgedeckt werden, auf dem die Interaktionselemente angeordnet sind. Der Gehäusedeckel wird dafür bevorzugt am Gehäusekörper lösbar befestigt, wie beispielsweise verschraubt. Dies hat den Vorteil, dass somit leicht zugänglicher Zugriff auf die elektronischen Bestandteile gewährleistet ist. Ausserdem kann so leicht die starre Leiterplatte ausgetauscht werden, oder ein Defekt der Interaktionselemente behoben werden. Zudem sind keine komplizierten Einführungen der Verkabelung durch Bohrlöcher und damit einhergehenden Abdichtungen benötigt, um Komponenten in das Gehäuseinnere einzuführen.

Die Anbringung des Motors im Gehäusedeckel ermöglicht eine kompakte Konstruktion, da der stirnseitige Gehäusedeckel gleichzeitig Motorgehäuse ist und somit Platz gespart wird.

Somit kann der Deckel den Dimensionen von Rotor und Stator angepasst werden und zusätzlich Platz im Gehäuseinnenraum eingespart werden.

Der stirnseitige Deckel mit der Öffnung für das Ausfahrelement umfasst zudem eine Lagerung und Dichtung für das Ausfahrelement. Die Dichtung verhindert Schäden und Verunreinigungen durch Staub, oder Dreck, sowie Verschleiss durch Luftfeuchtigkeit. Die Gehäusedeckel werden mit einem oder mehreren Befestigungselementen an dem Gehäuse befestigt und sind vorzugsweise lösbar.

Nach dem aktuellen Stand der Technik wir im Zwischenraum zwischen Drehelement und Ausfahrelement dem Ende des Drehelement oft ein Gleitlager platziert, um das Drehelement besser abzustützen.
Dies hat den Nachteil, dass das Gleitlager sowohl die Reibung der Rotations- als auch der Translationsbewegung aufnehmen muss und somit einem starken Verschleiss unterliegt.
Es ist daher eine Aufgabe der Erfindung, diese Nachteile im Stand der Technik zu überwinden und einen Elektrozylinder zu entwickeln, der die Haltbarkeit von Drehelement und Ausfahrelement in einem Elektrozylinder erhöht.

Ein Elektrozylinder, bevorzugt wie vorhergehend beschrieben, umfasst einen Motor mit Stator und Rotor, eine Spindelvorrichtung mit einem Drehelement und einem Ausfahrelement. Die Spindelvorrichtung umfasst ein Kombinationslager. Ein solches Kombinationslager umfasst ein Gleitlager und ein Kugellager. Dieses Kombinationslager wird zwischen dem Drehelement und Ausfahrelement angeordnet, vorzugsweise an einer Seite des Drehelements mit grösster Entfernung zum Motor.

Das Kombinationslager erhöht somit die Haltbarkeit des Elektrozylinders. Dies ist insbesondere ein Vorteil gegenüber vielen anderen Elektrozylindern.

Ein grosser Vorteil wird erzielt, wenn das Kombinationslager möglichst nahe an der maximalen Entfernung zum Motor zwischen dem Drehelement und dem Ausfahrelement angebracht ist, da dort der längste Hebelarm vorliegt. Dementsprechend wird das Kombinationslager vorzugsweise auf der dem Motor abgewandten Stirnseite zwischen dem Drehelement und dem Ausfahrelement angeordnet.

Vorzugsweise handelt es sich bei dem Motor des Elektrozylinders um einen bürstenlosen Motor, da dieser deutlich weniger Verschleiss unterliegt und eine höhere Lebensdauer aufweist. Eine Ermittlung der axialen Position des Ausfahrelements, sowie die Winkellage des Drehelements, sind bei Elektrozylindern bisweilen im Stand der Technik nur mit grossen Bauteilen möglich und somit mit grossem Platzaufwand verbunden. Die Bestimmung der axialen Position und Winkellage sollte zudem ermöglichen Rückschlüsse auf die Position des Rotors im Verhältnis zum Stator zu ziehen, da dies den Vorteil hat, dass der Motor kommutiert werden kann und ein bürstenloser Motor verwendet werden kann.

Gemäss einem weiteren Aspekt der Erfindung ist es daher eine Aufgabe der Erfindung, diese Nachteile des Standes der Technik zu überwinden und einen Elektrozylinder zu entwickeln, der eine platzsparende Methode zur Bestimmung der axialen Position des Ausfahrelements und Winkellage des Drehelements ermöglicht.

Die Aufgabe wird durch einen Elektrozylinder gemäss den unabhängigen Ansprüchen gelöst.

Der Elektrozylinder, insbesondere eine Elektrozylinder wie vorhergehend beschrieben, umfasst einen Motor mit Stator und Rotor, eine Spindelvorrichtung mit einem Drehelement und einem Ausfahrelement, insbesondere eine Steuervorrichtung, sowie zumindest einen Magneten, an oder in einer Stirnseite des Drehelements, sowie eine elektronische Gebervorrichtung. Die Gebervorrichtung ist im Wesentlichen axial zur Drehachse des Drehelements angeordnet. Die Gebervorrichtung dient zum Auslesen der Winkellage des Magneten und/oder Ermitteln der axialen Position des Ausfahrelements.

Diese Anbringung der Gebervorrichtung und des Magneten hat den Vorteil, dass die Stellung des Magneten sehr platzsparend ausgelesen werden kann. In diesem Zusammenhang wäre auch eine Anbringung des Magneten am Rotor vorstellbar, falls der Rotor nicht fest mit dem Drehelement verbunden ist. Vorzugsweise ist der Magnet aber auf der Drehachse des Drehelements angeordnet, da dies den Vorteil bietet, dass keine Unwucht entstehen kann. In diesem Fall ist der Magnet so ausgebildet, dass der Südpol des Magneten auf der einen Seite der Drehachse und der Nordpol des Magneten auf der anderen Seite der Drehachse, dem Südpol gegenüberliegend angeordnet ist.

Mit Hilfe eines Zählers und der Information über das Gewinde der Spindelvorrichtung, sowie der Winkellage des Magneten, kann nun durch die Steuervorrichtung und/oder Gebervorrichtung die axiale Position des Ausfahrelements bestimmt werden. Dies bietet den Vorteil, dass die Position des Ausfahrelements bestimmt werden kann, ohne dass die Auslesevorrichtung aus Magnet und Gebervorrichtung eine axiale Bewegung entlang der Drehachse des Drehelements ausführen muss.

Der Magnet kann in einer anderen Ausführungsform auch abseits der Drehachse, seitlich auf der Stirnseite des Drehelements angebracht sein, während die Gebervorrichtung mittig axial zum Drehelement angebracht ist. Die Information der Winkellage ergibt sich demnach aus der Änderung des Magnetfeldes durch die Drehung des Drehelements.

Der Elektrozylinder umfasst vorzugsweise einen Magnet, der den Nordpol auf einer Seite radial von der Drehachse entfernt aufweist und insbesondere den Südpol radial auf der gegenüberliegenden Seite der Drehachse aufweist.

Vorzugsweise weist der Magnet eine zur Achse des Drehelements orthogonale Polung auf. Das bietet den Vorteil, dass er mittig ohne Verschiebung des Schwerpunktes des Drehelements platziert ist und leicht ausgelesen werden kann. Sehr gut geeignet für diesen Einsatz ist ein Diametralmagnet, aber auch andere Magnetformen sind möglich.

Der Einbau eines Magneten mit Gebervorrichtung zur Bestimmung der Winkellage und axialer Position bietet den Vorteil einer grossen Platzersparnis, da die Messung der axialen Position des Ausfahrelements, nur durch Rotation des Magneten, statisch an der gleichen Stelle erfolgt.

Die Aufgabe wird weiterhin vorzugsweise durch die Verwendung eines Magneten an oder in einer Stirnseite des Drehelementes gelöst, dass der Magnet mit Gebervorrichtung zur Feststellung der Drehgeschwindigkeit des Drehelements und/oder Kommutierung des Motors anhand des Signals der elektronischen Gebervorrichtung und/oder Steuervorrichtung dient.

Dies hat den Vorteil, dass die Nutzung eines bürstenlosen Motors durch entsprechende Kommutierung möglich ist und zusätzlich keine weitere Sensorik wie etwa Hallsensoren benötigt werden.

Für die Kommutierung muss die Position/Winkellage von Rotor zum Stator zu jedem Zeitpunkt bekannt sein.

Da der Rotor vorzugsweise starr mit dem Drehelement verbunden, ist, und der Magnet starr mit dem Drehelement verbunden ist, ist durch die Winkellage des Magneten auch die Position des Rotors bestimmt. Dies hat den Vorteil, dass die Position des unbeweglichen Stators zu Rotor zu jedem Zeitpunkt gemessen werden kann.

Dies bietet den Vorteil, dass ein bürstenloser Motor verwendet werden kann. Ein bürstenloser Motor, vorzugsweise ein BLDC-Motor, ist effizienter als bürstenbehaftete Motoren oder Schrittmotoren, die ein hohes Haltemoment aufweisen und weniger dynamisch sind, und weist durch den geringeren Verschleiss eine höhere Lebensdauer auf. Die Kommutierung des Motors, also die Bestromung der richtigen Spulen zum richtigen Zeitpunkt, muss über die elektronischen Bestandteile der Steuervorrichtung und/oder Gebervorrichtung und der bestimmten Winkellage erfolgen.

Die Erfindung wird anhand von Figuren, die lediglich Ausführungsbeispiele darstellen, näher erläutert. Es zeigen:
- Figur 1:: Einen Längsschnitt durch einen erfindungsgemässen Elektrozylinder,
- Figur 2:: eine Aussenansicht des Gehäuses des Elektrozylinders,.
- Figur 3:: eine Aussenansicht des Gehäuses des,
- Figur 4:: einen Querschnitt des Elektrozylinders,
- Figur 5:: eine Aussenansicht, der dem Motor zugewandten Stirnseite des Elektrozylinders,
- Figur 6:: eine Aussenansicht, der dem Motor abgewandten Stirnseite des Elektrozylinders.

Gleiche Bezugszeichen in den Figuren kennzeichnen gleiche Bauteile.

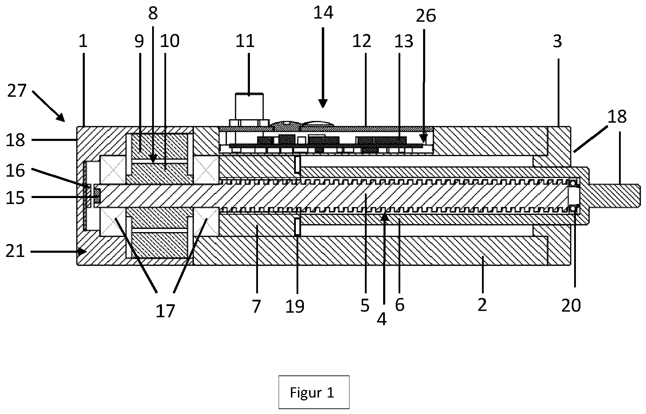

Figur 1 zeigt einen erfindungsgemässen Elektrozylinder 27 mit einer starren Leiterplatte 13 und einer Steuervorrichtung 14. Ein Motor 8 mit Stator 9 und Rotor 10 und eine Spindelvorrichtung 4 mit Drehelement 5 und Ausfahrelement 6 sind im Gehäuseinnenraum 26 angeordnet. Der Gehäuseinnenraum 26 wird durch die Abgrenzung des Gehäuses 21 nach aussen sowie aller Gehäusedeckel 1, 3 und 12 abgeschlossen. Die Öffnung, durch die das Ausfahrelement aus dem Elektrozylinder herausragt im vorderen Gehäusedeckel 3, beschränkt ebenfalls den Gehäuseinnenraum 26.

Im Gehäusedeckel 1 des Elektrozylinders, der gleichzeitig das Gehäuse des Motors 8 bildet, ist zudem der Magnet 15 und die Gebervorrichtung 16 zum Auslesen der Winkellage und axialer Position des Ausfahrelements 6 angeordnet.

Figur 1 zeigt zudem die Spindelmutter 7 und die dazugehörige Lage der Drehmomentstütze 19 und die Nutzung eines Kombinationslagers 20, das aus einem Gleitlager und Kugellager besteht, zwischen dem Drehelement 5 und Ausfahrelement 6, und die Bestandteile der Steuervorrichtung 14: die starre Leiterplatte 13, das Interaktionselement 12 und die Anschlüsse 11.

Des Weiteren zeigt Figur 1 die Anordnung des Motors 8 koaxial zur Spindelvorrichtung 4 innerhalb des Gehäusedeckels 1. Der Rotor, umgeben von zwei Rillenkugellagern 17 ist in dieser Ausführung starr mit dem Drehelement 5 der Spindelvorrichtung 4 verbunden.

Die Gehäusedeckel 1 und 3 sowie das Ausfahrelement 6 umfassen zudem Anschlusselemente 18.

Der Motor des Elektrozylinders kann durch eine Bestromung der Spulen des Stators 9 zum richtigen Zeitpunkt Strom in eine Rotationsbewegung des Rotors 8 umwandeln, der durch die beidseitigen Rillenkugellager 17 gelagert ist. Durch die Rotationsbewegung des Rotors, der starr mit der Drehelement 5 verbunden ist, dreht folglich auch das Drehelement 5. Das Drehelement 5 greift in dieser Ausführungsform in eine Spindelmutter 7, die die Drehbewegung auf eine Translationsbewegung des Ausfahrelements 6 überträgt. Das Ausfahrelement 6 kann lediglich eine Translationsbewegung aus dem Gehäuse 21 heraus oder hinein ausführen und dreht sich nicht. Dabei gewähren die beiden Kugellager um den Rotor 17 und das Kombinationslager 20 am vorderen Ende des Drehelements 5, dass die Reibung minimiert, die Kraft nicht stark verringert wird, oder Teile schnell verschleissen. Durch diese Translationsbewegung kann das Ausfahrelement 6, welches durch eine Öffnung des vorderen Gehäusedeckels 3 ragt, aus dem Gehäuseinneren 26 und wieder in das Gehäuseinnere 26 bewegt werden. Im maximal eingefahrenen Zustand des Ausfahrelements 6 kann das Ausfahrelement 6 teilweise aus dem Gehäuseinnenraum 26 ragen wie in Figur 1 zu sehen ist. Die Geschwindigkeit, Kraft, Bestromung des Stators 9 und Bestimmung der axialen Position des Ausfahrelements 6 und Winkellage wird von der Steuer- 14 und/oder Gebervorrichtung 16 gesteuert oder geregelt.

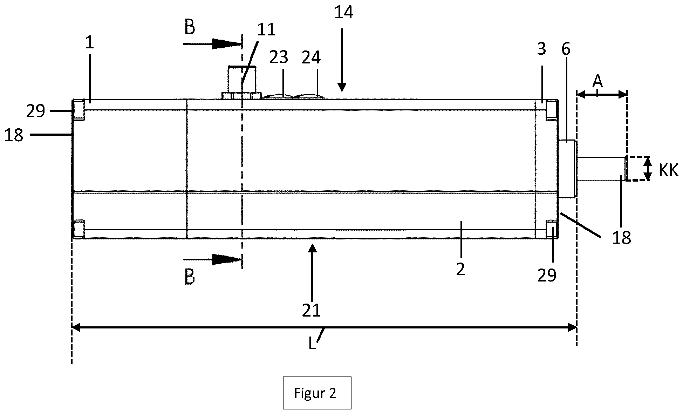

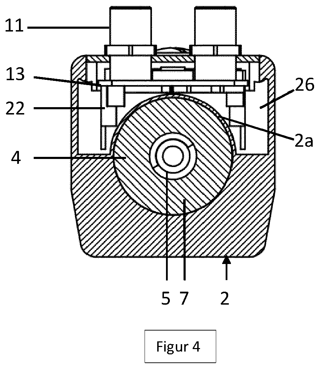

Figur 2 zeigt die Seitenansicht des Elektrozylinders aus Figur 1. Des Weiteren zeigt Figur 2 die Befestigung des hinteren Gehäusedeckels 1 und vorderen Gehäusedeckels 3 mit Schrauben 29 vorzugsweise mit Gewindesicherung. Der Querschnitt B des Elektrozylinders ist in Figur 4 gezeigt. Die Gewindeabmessung des Anschlusselements 18 des Ausfahrelements 6 wurde mit KK bezeichnet. Die Länge A bezeichnet die Länge des Anschlusselements 18 des Ausfahrelements 6, ausserhalb des Gehäuses 21.

Die Länge L ist kleiner oder gleich der folgenden Abmessung: L <= L_{b}+H.

H bezeichnet die maximale Hublänge in Millimeter und L_{b}, die von der Zylinderkraft (Fmax) abhängige Länge, wobei die Zylinderkraft (Fmax) die maximal vom Elektrozylinder 27 erreichbare Kraft darstellt, wobei L_{b} im Speziellen folgende kraftabhängigen Ausprägungen betrifft, die der Tabelle entnommen werden können.

**Tabelle:**

| Pneumatikzylinder Pendant (mm) | Fmax (N) | L_{b} (mm) | TG (mm) | RT | KK |
|---|---|---|---|---|---|
| 32 | 0-760 | 120 | 32.5 | M6 | M10 x 1.25 |
| 40 | 761-1180 | 135 | 38 | M6 | M12 x 1.25 |
| 50 | 1181-1870 | 143 | 46.5 | M8 | M16 x 1.5 |
| 63 | 1871-3020 | 158 | 56.5 | M8 | M16 x 1.5 |
| 80 | 3021-4710 | 174 | 72 | M10 | M20 x 1.5 |
| 100 | 4711-7360 | 189 | 89 | M10 | M20 x 1.5 |
| 125 | 7361-12060 | 225 | 110 | M12 | M27 x 2 |
| 160 | 12061-18850 | 260 | 140 | M16 | M36 x 2 |

Die Abmessungen durch Einbaulänge, Befestigungsmöglichkeiten und Baugrössen, sind denen von Pneumatikzylindern somit sehr ähnlich und entsprechen vorzugsweise der ISO 15552 Norm. Die Bezeichnung "Pneumatikzylinder Pendant" bedeutet, dass die Werte analog zu einem Pneumatikzylinder mit einem derartigen Kolbendurchmesser zu verstehen sind.

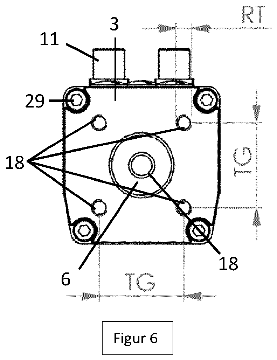

Die Länge TG ist in Figur 6 dargestellt.

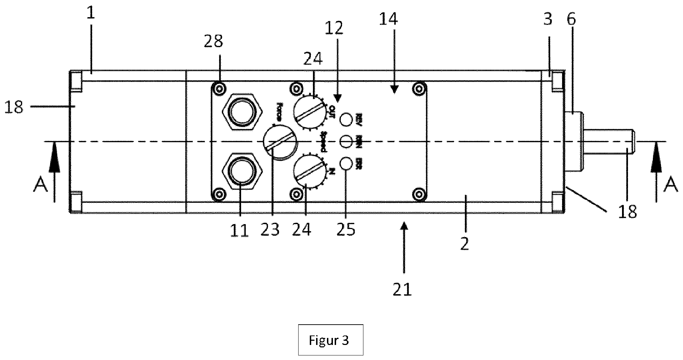

Figur 3 zeigt die Oberseite des Elektrozylinders 27 mit der Steuervorrichtung 14, bestehend aus den Anschlüssen 11 und dem Interaktionselement 12. Das Interaktionselement 12 weist Einstellelemente 23, 24 und 25 für die Geschwindigkeitsverstellung 24 und Kraftverstellung 23, sowie Zustandsanzeigeelemente in Form von Leuchten 25, vorzugsweise LEDs, auf. Die Einstellelemente 24 der Geschwindigkeitsverstellung ermöglichen unterschiedliche Einstellungen beim Ausfahren (OUT) und Einfahren (IN) des Ausfahrelements 6. In diesem Ausführungsbeispiel ist der körperseitige Gehäusedeckel gleichzeitig das Interaktionselement 12, welches in dieser Ausführungsform durch 6 Schrauben 28 befestigt ist.
Des Weiteren ist hier der Längsschnitt A, der in Figur 1 dargestellt ist gezeigt.

Figur 4 zeigt den Querschnitt B des Elektrozylinders 27 an der Stelle der Anschlüsse 11 und dem Gehäuseinnenraum 26. Somit sind zum einen die Spindelvorrichtung 4, sowie die starre Leiterplatte 13 zu sehen. In Figur 4 wird gezeigt, in welcher Form die grossen elektronischen Bauelemente 22 angeordnet sind und in das Gehäuseinnere ragen, um Platz zu sparen. Dieser platzsparende Aufbau ermöglicht es mit nur einer starren Leiterplatte 13 der Steuervorrichtung 14 die Funktion des Elektrozylinders und seine Eigenschaften zu ermöglichen.
Des Weiteren wird auf den elektronischen Bauelementen 22 eine, vorzugsweise isolierende, wärmeleitende Folie angebracht und sichergestellt, dass die elektronischen Bauelemente das Gehäuse nicht berühren.

Das Gehäuse 2 umschliesst mit einer Gehäusetrennwand 2a zudem die Spindelvorrichtung 4 zur Seite der starren Leiterplatte 13. Dadurch kann sichergestellt werden, dass mögliche Einschlüsse von Staub, Verunreinigungen oder Feuchtigkeit, die sich aus dem Ein- und Ausfahren des Ausfahrelements 6 ergeben nicht die Steuervorrichtung 14 beeinträchtigen können.

Die im Wesentlichen quadratische Grundfläche dieser Ausführung des Elektrozylinders weist abgerundete Ecken und die Seiten verlaufen leicht trichterförmig zur gegenüberliegenden Seite der Elektronik.

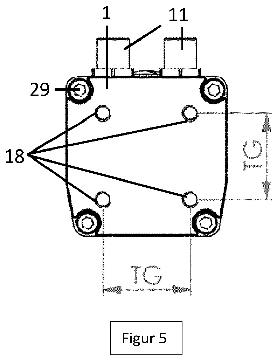

Figur 5 zeigt die hintere Stirnseite des Elektrozylinders 27. Der hintere Gehäusedeckel 1 ist in diesem Ausführungsbeispiel mit 4 Schrauben 29 lösbar befestigt und weist jeweils 4 Anschlusselemente 18 in Form von Löchern mit Gewinde auf. Der in der Tabelle referenzierte Abstand TG, ist zwischen den Anschlussvorrichtungen der Anschlusselementen 18 des hinteren Gehäusedeckels 1 und vorderen Gehäusedeckels 3 in Figur 5 gezeigt.

Figur 6 zeigt die vordere Stirnseite des Elektrozylinders 27 mit vorderen Gehäusedeckel 3 auf. Der vordere Gehäusedeckel 3 weist ebenfalls 4 Anschlusselemente 18 auf.
Ausserdem zeigt Figur 6 das Anschlusselement 18 des Ausfahrelements 6, in dieser Ausführungsform als ein Gewinde. Die Anordnung der Anschlusselemente 18 haben einen Durchmesser RT und sind in diesem im Wesentlichen quadratischen Aufbau des Gehäusedeckels 1 und 3 ebenfalls quadratisch angeordnet.

## Patentansprüche

1. Elektrozylinder umfassend einen Motor (8) mit Stator (9) und Rotor (10), eine Spindelvorrichtung (4) mit einem Drehelement (5) und einem Ausfahrelement (6), einer Steuervorrichtung (14), wobei die Steuervorrichtung (14) den Motor (8) steuert, und ein Gehäuse (21) mit einem Gehäuseinnenraum, wobei der Rotor (10) und das Drehelement (5) dieselbe Drehachse haben und bevorzugt der Rotor (10) auf dem Drehelement (5) fixiert ist, so dass der Motor (8) die Spindelvorrichtung (4) antreibt **dadurch gekennzeichnet, dass** die Steuervorrichtung (14) genau eine starre Leiterplatte (13) für die Motorsteuerung umfasst, wobei der Motor (8), das Drehelement (5), und die Steuervorrichtung (14) im Gehäuseinnenraum angeordnet sind.

2. Elektrozylinder nach Anspruch 1, **dadurch gekennzeichnet, dass** die Spindelvorrichtung (4) eine Spindelmutter (7) umfasst, die mit in das Gewinde des Drehelements (5) greift und mit dem Ausfahrelement (6) mittels eines Gewindes an der Spindelmutter (7) starr verbunden ist, ohne ein zusätzliches Verbindungselement und die Drehbewegung des Drehelements (5) in eine axiale Ausfahrbewegung des Ausfahrelements (6) umwandelt.

3. Elektrozylinder nach einem der vorhergehenden Ansprüche, **dadurch gekennzeichnet, dass** die starre Leiterplatte (13) in Bezug auf die Bauhöhe senkrecht zur Leiterplattenebene kleine und grosse elektronische Bauelemente (22) umfasst, wobei zumindest ein, bevorzugt alle grossen elektronischen Bauelemente (22), insbesondere Transistoren und/oder Wandler, am Rand der Leiterplatte (13), insbesondere am Rand einer längeren Seite der Leiterplatte (13), angeordnet sind.

4. Elektrozylinder nach einem der vorhergehenden Ansprüche, **dadurch gekennzeichnet, dass** die Steuervorrichtung (14) einen Anschluss zur Leistungs- und Spannungsversorgung und einen Anschluss zur Kommunikation mit der Steuerungsvorrichtung umfasst.

5. Elektrozylinder nach einem der vorhergehenden Ansprüche, **dadurch gekennzeichnet, dass** die Steuervorrichtung (14) ein Interaktionselement (12) umfasst, wobei das Interaktionselement (12) Einstellelemente und/oder Zustandsanzeigeelemente (23, 24, 25) umfasst, wobei die Einstellelemente zur Geschwindigkeitsverstellung (24) und/oder Kraftverstellung (25) direkt am Zylinder dienen.

6. Elektrozylinder nach einem der vorhergehenden Ansprüche, **dadurch gekennzeichnet, dass** Anschlusselemente (18) vorhanden sind, wobei mindestens eins der Anschlusselemente (18) am Ausfahrelement (6) angeordnet ist, insbesondere ist ein Anschlusselemente (18) an einer oder an beiden Stirnseiten des Gehäuses ausgebildet.

7. Elektrozylinder nach einem der vorhergehenden Ansprüche **dadurch gekennzeichnet, dass** ein Querschnitt des Elektrozylinders orthogonal zur Drehelementachse niemals breiter, als 150 % des Aussendurchmessers des Motors ist, abgesehen von den aus dem Gehäuse (21) ragenden Anschlüssen (11) .

8. Elektrozylinder nach einem der vorhergehenden Ansprüche, **dadurch gekennzeichnet, dass** koaxial zum Drehelement (5) beidseitig des Rotors Kugellager (17) angeordnet sind.

9. Elektrozylinder nach einem der vorhergehenden Ansprüche, **dadurch gekennzeichnet, dass** der Elektrozylinder ein im Wesentlichen vieleckiges Gehäuse (21) aufweist, bevorzugt im Wesentlichen viereckig, insbesondere bevorzugt im Wesentlichen quadratisch und/oder insbesondere ein Körper des Gehäuses aus einem Aluminium-Strangpressprofil (2) gefertigt ist.

10. Elektrozylinder nach einem der vorhergehenden Ansprüche, **dadurch gekennzeichnet, dass** das Gehäuse (21) über die gesamte Länge den gleichen Querschnitt aufweist, abgesehen von Anschlüssen (11) und Zustandsanzeigeelemente (23, 24, 25).

11. Elektrozylinder nach einem der vorhergehenden Ansprüche, **dadurch gekennzeichnet, dass** das Gehäuse einen körperseitigen und zwei stirnseitige Gehäusedeckel (1, 3) umfasst, wobei einer der stirnseitigen Gehäusedeckel gleichzeitig ein Motorgehäuse des Motors (8) ist.

12. Elektrozylinder nach einem der vorhergehenden Ansprüche, **dadurch gekennzeichnet, dass** die Spindelvorrichtung (4) ein Kombinationslager (20) umfasst, wobei das Kombinationslager (20) ein Gleitlager und ein Kugellager umfasst, das zwischen Drehelement (5) und Ausfahrelement (6) angeordnet ist, vorzugsweise an einer Seite des Drehelements mit grösster Entfernung zum Motor.

13. Elektrozylinder, insbesondere nach einem der vorhergehenden Ansprüche, umfassend einen Motor mit Stator (9) und Rotor (10), eine Spindelvorrichtung (4) mit einem Drehelement (5) und einem Ausfahrelement (6),insbesondere eine Steuervorrichtung (14), sowie zumindest einen Magneten (15) an oder in einer Stirnseite des Drehelements (5), sowie eine elektronischen Gebervorrichtung (16) im Wesentlichen axial zur Drehachse des Drehelements zum Auslesen der Winkellage des Magneten (15) und/oder Ermitteln der axialen Position des Ausfahrelements (6).

14. Elektrozylinder nach Anspruch 13, **dadurch gekennzeichnet, dass** der Magnet (15) den Nordpol auf einer Seite radial von der Drehachse entfernt aufweist und insbesondere den Südpol radial auf der gegenüberliegenden Seite der Drehachse aufweist.

15. Elektrozylinder nach einem der Ansprüche 13-14, **dadurch gekennzeichnet, dass** der Magnet (15) mit Gebervorrichtung (16) zur Feststellung der Drehgeschwindigkeit des Drehelements (5) und/oder Kommutierung des Motors (8) anhand des Signals der elektronischen Gebervorrichtung (16) und/oder Steuervorrichtung (14) dient.
